# EUROPÄISCHE PATENTSCHRIFT

(11) **EP 3 928 668 B1**
(45) Veröffentlichungstag und Bekanntmachung des Hinweises auf die Patenterteilung: **20.03.2024**
(21) Anmeldenummer: 21174975.9
(22) Anmeldetag: 20.05.2021
(51) Int. Cl.: A47J 31/60

(54) **KAFFEEAUTOMAT**
COFFEE MACHINE
MACHINE À CAFÉ

(30) Priorität: 24.06.2020 DE 102020207839
(43) Veröffentlichungstag der Anmeldung: 29.12.2021
(73) Patentinhaber: BSH Hausgeräte GmbH, 81739 München (DE)
(72) Erfinder: Mies, Maximilian, 83253 Rimsting (DE); Quittek, Benno, 83278 Traunstein (DE); Steffl, Michael, 83250 Marquartstein (DE)

(56) Entgegenhaltungen:
- DE-A1-102012 105 442
- DE-A1-102014 101 957
- DE-A1-102014 113 161

## Beschreibung

Die vorliegende Erfindung betrifft einen Kaffeeautomaten. Die Erfindung betrifft außerdem ein Verfahren zum Betrieb eines solchen Kaffeeautomaten.

Für eine lange Lebensdauer eines Kaffeeautomaten ist es erforderlich, diesen turnusmäßig zu pflegen, beispielsweise zu entkalken, und dadurch die dauerhafte Funktionalität der Komponenten sicherzustellen. Um einen Kaffeeautomaten zu entkalken, wird beispielsweise nach einer gewissen Zeit bzw. einer gewissen Anzahl an Brühvorgängen ein Entkalkungsvorgang gestartet, bei welchem ein Entkalkungsmittel, beispielsweise ein Fluid oder Entkalkungstabletten, in den Wassertank eingelegt und über sämtliche wasserführenden Leitungen befördert wird, wodurch die saure Lösung den sich in den Leitungen abgesetzten Kalk löst. Derartige Entkalkungsvorgänge müssen jedoch üblicherweise von einem Benutzer des Kaffeeautomaten händisch gestartet werden, wobei bei modernen Kaffeeautomaten bereits Anzeigeeinrichtungen vorgesehen sind, die das Erfordernis eines Durchführens des Entkalkungsvorgangs frühzeitig anzeigen.

Nachteilig bei den bekannten Kaffeeautomaten ist jedoch, dass der Entkalkungsvorgang üblicherweise durch den Nutzer gestartet werden muss, so dass dieser gezwungen ist, ein Zeitfenster auszuwählen, in welchem er einerseits den Kaffeeautomaten nicht benötigt und andererseits Zeit hat, den Entkalkungsvorgang zu starten und zu beobachten. Dies stellt eine nicht unerhebliche Komforteinschränkung dar, da ein Benutzer bzw. eine Benutzerin üblicherweise nur dann mit dem Kaffeeautomaten in Kontakt kommt, sofern er/sie den Bezug eines Kaffeegetränks wünscht. Kaffeeautomaten und Verfahren zu deren Betrieb sind auch aus der DE 10 2014 113 161 A1 und der DE 10 2014 101 957 A1 bekannt.

Die vorliegende Erfindung beschäftigt sich daher mit dem Problem, einen Kaffeeautomaten anzugeben, der die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen intelligenten Kaffeeautomaten bereitzustellen, der nicht nur ein entsprechendes Reinigungs-/Pflegemittel bevorraten kann, sondern auch einen Reinigungs-/Pflegeprozess automatisch und in Abstimmung eines Nutzungsverhaltens des Kaffeeautomaten automatisch starten kann. Der erfindungsgemäße Kaffeeautomat besitzt dabei einen Vorratsbehälter, in welchem das Reinigungs-/Pflegemittel, beispielsweise ein Entkalkungsfluid oder Entkalkungstabletten, bevorratet werden können. Ebenfalls weist der Kaffeeautomat eine Steuerungseinrichtung zum Steuern, insbesondere zum Aktivieren und Durchführen, des Reinigungs-/ Pflegeprozesses auf. Über eine Erfassungs-/Auswerteeinrichtung ist der erfindungsgemäße Kaffeeautomat in der Lage, ein Nutzungsverhalten, insbesondere einen Betrieb, des Kaffeeautomaten zu erfassen und auszuwerten und in Abhängigkeit der bei diesem Auswerteprozess ermittelten Werte den Reinigung-/Pflegeprozess automatisch zu aktivieren. Hierdurch ist es möglich, einen selbstlernenden Kaffeeautomaten bereitzustellen, der sich an das Nutzungsverhalten anpasst und den Reinigungs-/Pflegeprozess üblicherweise ausschließlich dann durchführt, sofern er hierfür ein Zeitfenster erkennt, in welchem der Kaffeeautomat nicht genutzt wird. Die Erfassungs-/Auswerteeinrichtung kann dabei beispielsweise über ein Vernetzungsmodul (Home Connect) erfassen und auswerten, wann der Kaffeeautomat in Gebrauch und wann er ausgeschaltet ist. Dabei kann die Erfassungs-/Auswerteeinrichtung unterschiedlichste Prozessparameter des Reinigungs-/Pflegeprozesses variabel gestalten, so dass beispielsweise ein Standard-Reinigungs-/Pflegeprozess mit einer Prozessdauer von zwei Stunden auf beispielsweise eine Prozessdauer von sechs Stunden erhöht werden kann, sofern die Erfassungs-/ Auswerteeinrichtung ein regelmäßiges Zeitfenster von beispielsweise größer sechs Stunden, vorzugsweise acht Stunden, erkennt, in dem der Kaffeeautomat nie benutzt wird. Durch die Verlängerung der Einwirkzeit, beispielsweise bei einem Entkalkungsprozess, kann die aus dem Reinigungs-/Pflegemittel erzeugte Entkalkungslösung effizienter genutzt werden, da die Kontaktzeit verdreifacht wird. Hierdurch lässt sich mit der gleichen Entkalkungslösung mehr Kalk lösen. Analog ist es selbstverständlich auch denkbar, dass bei einer gleichbleibenden Menge an zu lösendem Kalk durch die verlängerte Prozessdauer eine Konzentration der aus Reinigungs-/Pflegemittel und Wasser bestehenden Reinigungs-/Pflegelösung reduziert werden kann, wodurch die Dosierung oder Menge des verwendeten Reinigungs-/Pflegemittels verringert werden kann und dieses dadurch länger hält. Eine Adaption der Konzentration der Reinigungs-/Pflegelösung kann dabei nicht nur an die zur Verfügung stehende Prozessdauer, sondern auch an eine bezogene Getränkemenge zwischen zwei Reinigungs-/Pflegeprozessen angepasst werden. Dabei ist die Erfassungs-/Auswerteeinrichtung und die damit kommunizierend verbundene Steuerungseinrichtung zusätzlich derart ausgebildet, dass die einzelnen Prozessparameter, wie beispielsweise Abstand zwischen zwei Reinigungs-/Pflegeprozessen, an ein Nutzungsverhalten des Kaffeeautomaten angepasst werden kann. Beispielsweise können zwischen zwei Reinigungs-/Pflegeprozessen standardmäßig einhundert Getränke bezogen werden. Dabei ist klar, dass bei einer Nutzung des Kaffeeautomaten von Montag bis Freitag, beispielsweise im Büro- und/oder Schichtbetrieb, diese Getränkeanzahl mit großer Wahrscheinlichkeit übertroffen wird. Um den Kaffeeautomaten in diesem Zeitraum nicht aufgrund eines erforderlichen Reinigungs-/Pflegeprozesses zu sperren, kann die Reinigung/Pflege auch am Wochenende durchgeführt werden. Hier besteht die Möglichkeit, mit einer erhöhten Prozessdauer, das heißt einer erhöhten Einwirkzeit, einer stärkeren Konzentration des Reinigungs-/Pflegemittels und/oder auch der Durchführung von mehreren Reinigungs-/Pflegeprozessen in direkter Abfolge, ein größeres Volumen an Kalk lösen zu können.

Generell wird in der Beschreibung in Bezug auf den Reinigungs-/Pflegeprozess oftmals auf das Lösen von Kalk eingegangen, wobei selbstverständlich die Erfassungs-/Auswerteeinrichtung auch andere Prozessparameter oder Zyklusabstände für weitere Reinigungs-/Pflegeprozesse erfassen und umsetzen kann.

Unter dem Begriff "Nicht-Nutzungszeit" kann beispielsweise eine Stand-By-Zeit, ein Betrieb mit einer Leistung unterhalb einer vordefinierten Leistung oder ein Aus-Zustand subsummiert werden. Unter dem Begriff "Nutzungszeit" kann beispielsweise eine Bezugszeit mit Getränkebezug, ein Betrieb mit einer Leistung oberhalb einer vordefinierten Leistung oder ein Ein-Zustand subsummiert werden.

Der große Vorteil des erfindungsgemäßen Kaffeeautomaten besteht somit in der Bereitstellung und Bevorratung eines Reinigungs-/Pflegemittels direkt im Kaffeeautomaten, einer Optimierung des Reinigungs-/Pflegeprozesses hinsichtlich der Nutzung des Kaffeeautomaten sowie einer Optimierung der Reichweite des Reinigungs-/Pflegemittels. Zudem kann ein Reinigungs-/Pflegeprozess materialschonend ausgeführt werden, da beispielsweise durch eine erhöhte Prozessdauer, das heißt Länge des Reinigungs-/Pflegeprozesses, die Konzentration einer Reinigungs-/Pflegelösung reduziert werden kann. Von besonderem Vorteil ist darüber hinaus, dass kein separater Timer am Kaffeeautomaten erforderlich ist, über welchen ein jeweiliger Reinigungs-/Pflegeprozess manuell eingestellt werden muss. Ebenfalls vorteilhaft ist, dass eine kontinuierliche Reinigung/Pflege des Kaffeeautomaten erfolgt, wodurch dessen Funktionalität langfristig aufrechterhalten und dessen Lebensdauer verlängert werden kann.

Erfindungsgemäß ist die Erfassungs-/Auswerteeinrichtung derart ausgebildet, dass sie Nicht-Nutzungszeiten erfasst und hieraus eine übliche Nicht-Nutzungszeit ermittelt und in dieser über die Steuerungseinrichtung den Reinigungs-/Pflegeprozess aktiviert bzw. steuert, und/oder ist die Erfassungs-/Auswerteeinrichtung derart ausgebildet, dass sie Nutzungszeiten erfasst und hieraus eine übliche Nutzungszeit ermittelt und außerhalb dieser über die Steuerungseinrichtung den Reinigungs-/Pflegeprozess aktiviert bzw. steuert. Dies bietet den großen Vorteil, dass die Erfassungs-/Auswerteeinrichtung beispielsweise Zeitfenster erfasst, in welchen der Kaffeeautomat nicht genutzt, das heißt beispielsweise im StandBy betrieben wird. Bei Kaffeeautomaten, welche beispielsweise in einem Büro aufgestellt sind, wird die Erfassungs-/Auswerteeinrichtung demnach Nicht-Nutzungszeiten erfassen, beispielsweise am Wochenende, in welchen kein Kaffeebezug erfolgt. Auch zwischen 20:00 Uhr abends und 6:00 Uhr morgens dürfte die Erfassungs-/Auswerteeinrichtung eine übliche Nicht-Nutzungszeit ermitteln, in denen kein Kaffeebezug erfolgt, so dass in diesen üblichen Nicht-Nutzungszeiten der Reinigungs-/Pflegeprozess auch mit verlängerter Prozessdauer und damit reduzierter Konzentration einer aus Reinigungs-/Pflegemittel und Wasser bestehenden Reinigungs-/Pflegelösung erfolgen kann. Durch das Ermitteln von üblichen Nicht-Nutzungszeiten ist es somit möglich, dass der Kaffeeautomat einen Reinigungs-/Pflegeprozess ausschließlich dann startet, wenn er davon ausgehen kann, dass in dem zur Verfügung stehenden Zeitfenster kein Kaffeebezug erwünscht wird. In analoger Weise kann die Erfassungs-/Auswerteeinrichtung beispielsweise auch Zeitfenster erfassen, in welchen der Kaffeeautomat genutzt, das heißt betrieben wird. Bei Kaffeeautomaten, welche beispielsweise in einem Büro aufgestellt sind, wird die Erfassungs-/Auswerteeinrichtung demnach Nutzungszeiten beispielsweise an Werktagen zwischen 08:00 Uhr morgens und 18:00 Uhr abends als eine übliche Nutzungszeit ermitteln, in denen ein Kaffeebezug erfolgt, so dass in diesen üblichen Nutzungszeiten der Reinigungs-/Pflegeprozess nicht durchgeführt und außerhalb dieser Nutzungszeiten auch mit verlängerter Prozessdauer und damit reduzierter Konzentration einer aus Reinigungs-/Pflegemittel und Wasser bestehenden Reinigungs-/Pflegelösung erfolgen kann. Dabei ist selbstverständlich denkbar, dass die Erfassungs-/Auswerteeinrichtung die ermittelte übliche Nicht-Nutzungszeit und/oder Nutzungszeit turnusmäßig oder permanent überprüft und an ein geändertes Nutzungsverhalten des Kaffeeautomaten anpasst. Hierdurch kann eine erheblich Komfortsteigerung im Umgang mit dem Kaffeeautomaten erreicht werden, da sich dieser selbst reinigt bzw. pflegt und dies außerhalb der üblichen Nutzungszeiten, so dass es zu keinerlei Einschränkung eines Kaffeebezugswunsches kommt.

Zweckmäßig ist die Erfassungs-/Auswerteeinrichtung derart ausgebildet, dass sie in Abhängigkeit der ermittelten üblichen Nicht-Nutzungszeit oder Nutzungszeit eine Konzentration des Reinigungs-/Pflegemittels und/oder eine Dauer des Reinigungs-/Pflegeprozesses festlegt. Dies bietet den großen Vorteil, dass bei einer ermittelten üblichen Nicht-Nutzungszeit von mehreren Stunden ein materialschonendes Reinigen bzw. Pflegen des Kaffeeautomaten durch eine reduzierte Konzentration des Reinigungs-/Pflegemittels, ein mehrmaliges Durchführen eines Reinigungs-/Pflegeprozesses hintereinander und/oder eine längere Prozessdauer erfolgen kann. Hierdurch kann insgesamt eine schonende und dennoch kontinuierliche Pflege bzw. Reinigung des Kaffeeautomaten erfolgen.

Bei einer weiteren vorteilhaften Ausführungsform der erfindungsgemäßen Lösung ist eine Eingabeeinrichtung vorgesehen, über welche ein Reinigungs-/Pflegeprozess manuell aktivierbar ist. Dies bietet den großen Vorteil, dass unabhängig von der selbsttätigenden Reinigung/Pflege des Kaffeeautomaten generell auch eine manuelle Aktivierung eines Reinigungs-/Pflegeprozesses möglich ist. Neben der Eingabeeinrichtung kann selbstverständlich zusätzlich noch bei einer weiteren Ausführungsform ein Timer vorgesehen sein, über welchen eine vorbestimmte Startzeit für den Reinigungs-/Pflegeprozess einstellbar ist. Ein derartiger Timer bietet beispielsweise den Vorteil, dass ein Reinigungs /Pflegeprozess außerhalb einer Nutzungszeit, beispielsweise über die Nachtstunden, aktiviert werden kann, bevor anschließend eine längere Urlaubszeit folgt, in der der Kaffeeautomat aufgrund seiner Erfassungs-/Auswerteeinrichtung keinen erforderlichen Reinigungs-/Pflegeprozess ermitteln würde. Durch den Timer kann jedoch gewährleistet werden, dass vor einer längeren Stillstandzeit der Kaffeeautomat nochmals gereinigt bzw. gepflegt und anschließend abgeschaltet oder zumindest in den StandBy-Modus geschickt wird. Hierdurch kann zuverlässig verhindert werden, dass der Kaffeeautomat über einen längeren Zeitraum ungereinigt bleibt.

Alternativ ist selbstverständlich auch denkbar, dass die Erfassungs-/Auswerteeinrichtung neben einer Anzahl an bezogenen Getränken auch eine Zeitdauer erfasst und nach einer vordefinierten Zeitdauer den Reinigungs-/Pflegeprozess startet, obwohl die üblicherweise hierfür erforderliche Tassenanzahl noch nicht erreicht wurde. Auch hierdurch kann sichergestellt werden, dass in einem Urlaub der Kaffeeautomat nicht längere Zeit ungereinigt bzw. ungepflegt stehen bleibt.

Die vorliegende Erfindung beruht weiter auf dem allgemeinen Gedanken, ein Verfahren zum Betrieb des zuvor beschriebenen Kaffeeautomaten anzugeben, bei dem eine Erfassungs-/Auswerteeinrichtung ein Nutzungsverhalten, insbesondere einen Betrieb, des Kaffeeautomaten erfasst und auswertet und einen Reinigungs-/Pflegeprozess daran anpasst und über eine Steuerungseinrichtung automatisch aktiviert. Mittels des erfindungsgemäßen Verfahrens ist es somit möglich, einen sich selbst reinigenden Kaffeeautomaten bereitstellen zu können, dessen Reinigungs-/Pflegeprozess vorzugsweise kontinuierlich an das Nutzungsverhalten bzw. den Betrieb des Kaffeeautomaten angepasst wird.

Bei einer vorteilhaften Weiterbildung des erfindungsgemäßen Verfahrens erfasst die Erfassungs-/Auswerteeinrichtung Nicht-Nutzungszeiten und ermittelt hieraus eine übliche Nicht-Nutzungszeit und aktiviert bzw. steuert in dieser üblichen Nicht-Nutzungszeit über die Steuerungseinrichtung den Reinigungs-/Pflegeprozess. Zusätzlich oder alternativ ist denkbar, dass die Erfassungs-/Auswerteeinrichtung Nutzungszeiten erfasst und hieraus eine übliche Nutzungszeit ermittelt und außerhalb dieser über die Steuerungseinrichtung den Reinigungs-/Pflegeprozess aktiviert bzw. steuert. Diese Ausgestaltung des erfindungsgemäßen Verfahrens bietet den großen Vorteil, dass der Reinigungs-/Pflegeprozess ausschließlich dann aktiviert wird, sofern der Kaffeeautomat in diesem Zeitraum üblicherweise nicht genutzt wird. Hierdurch sind Einschränkungen eines Kaffeebezugs nicht zu befürchten, wodurch eine erhebliche Komfortsteigerung erreicht werden kann.

Zweckmäßig legt die Erfassungs-/Auswerteeinrichtung in Abhängigkeit der ermittelten üblichen Nicht-Nutzungszeit oder Nutzungszeit eine Konzentration des Reinigungs-/Pflegemittels und/oder eine Dauer des Reinigungs-/Pflegeprozesses fest. Ermittelt die Erfassungs-/Auswerteeinrichtung beispielsweise eine übliche Nicht-Nutzungszeit zwischen abends 20:00 Uhr und morgens 6:00 Uhr sowie an Samstagen und Sonntagen, so ist es möglich, in diesen Zeitfenstern den Reinigungs-/Pflegeprozess zu starten, wobei beispielsweise die Prozessdauer verlängert und dabei eine Konzentration der aus Reinigungs-/Pflegemittel und Wasser bestehenden Reinigungs-/Pflegelösung reduziert werden, wodurch eine materialschonende Reinigung, beispielsweise Entkalkung, erfolgen kann. Durch eine Reduzierung der Konzentration kann das Reinigungs-/Pflegemittel auch über einen längeren Zeitraum zur Verfügung stehen, da je Reinigungs-/Pflegeprozess weniger Reinigungs-/Pflegemittel verbraucht wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen erfindungsgemäßen Kaffeeautomaten,
- Fig. 2: mögliche Verfahrensschritte eines erfindungsgemäßen Verfahrens zum Betrieb des Kaffeeautomaten.

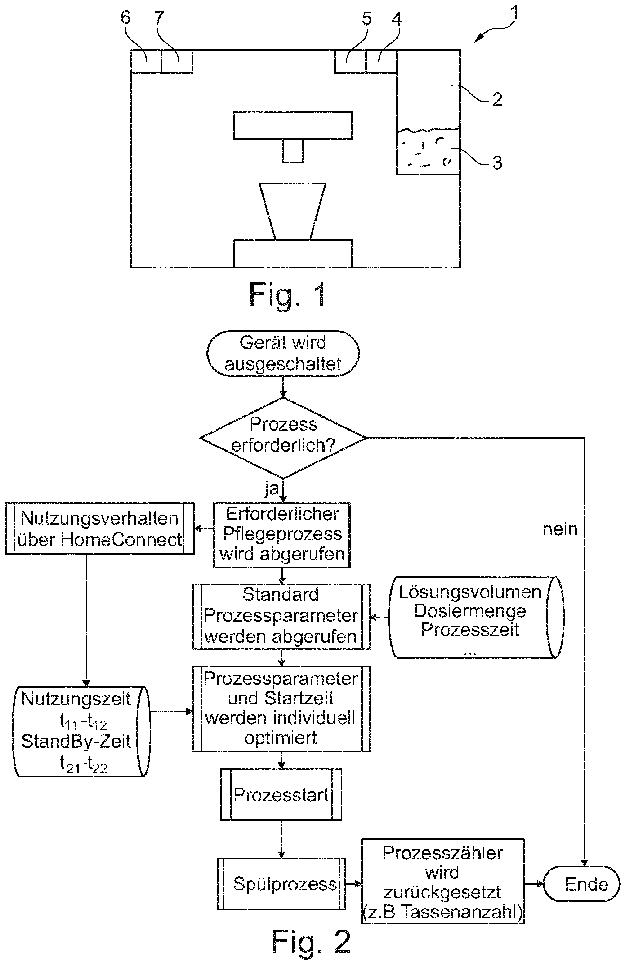

Entsprechend der Figur 1, weist ein erfindungsgemäßer Kaffeeautomat 1 einen Vorratsbehälter 2 für ein Reinigungs-/Pflegemittel 3 auf. Ebenfalls vorgesehen ist eine Steuerungseinrichtung 4 zum Steuern eines Reinigungs-/Pflegeprozesses sowie eine Erfassungs-/Auswerteeinrichtung 5 zur Erfassung und Auswertung eines Betriebs des Kaffeeautomaten 1. Die Erfassungs-/Auswerteeinrichtung 5 ist dabei erfindungsgemäß derart ausgebildet, dass sie ein Nutzungsverhalten des Kaffeeautomaten 1 erfasst und auswertet und den Reinigungs-/Pflegeprozess daran anpasst und automatisch aktiviert.

Generell muss dabei die Erfassungs-/Auswerteeinrichtung 5 nicht im Kaffeeautomaten 1 selbst untergebracht sein, sondern kann auch an anderer Stelle, z.B. einem Handy mit APP oder einem Server über Home Connect, angeordnet sein.

Hierbei ist die Erfassungs-/Auswerteeinrichtung 5 derart ausgebildet, dass sie Nicht-Nutzungszeiten erfasst und hieraus eine übliche Nicht-Nutzungszeit ermittelt und in dieser über die Steuerungseinrichtung 4 den Reinigungs-/Pflegeprozess aktiviert bzw. steuert. Zusätzlich oder alternativ werden durch die Erfassungs-/Auswerteeinrichtung 5 Nutzungszeiten, das heißt Betriebszeiten des Kaffeeautomaten 1, erfasst und hieraus eine übliche Nutzungszeit ermittelt und außerhalb dieser über die Steuerungseinrichtung 4 den Reinigungs-/Pflegeprozess aktiviert bzw. steuert. Hierbei kann beispielsweise vorgesehen sein, dass sofern der Kaffeeautomat 1 beispielsweise abends zwischen 20:00 Uhr und morgens zwischen 6:00 Uhr nicht genutzt wird, eine in diesem Zeitfenster übliche Nicht-Nutzungszeit bestimmt und der Reinigungs-/Pflegeprozess ausschließlich in diesem Zeitfenster aktiviert wird. Hierdurch ist eine Nutzungseinschränkung während einer üblichen Nutzungszeit, das heißt beispielsweise tagsüber, nicht erforderlich, wodurch eine Komfortsteigerung erreicht werden kann.

Des Weiteren kann die Erfassungs-/Auswerteeinrichtung 5 derart ausgebildet sein, dass sie in Abhängigkeit der ermittelten üblichen Nicht-Nutzungszeit oder der üblichen Nutzungszeit eine Konzentration des Reinigungs-/Pflegemittels 3 und/oder eine Dauer des Reinigungs-/Pflegeprozesses, das heißt eine Prozessdauer, festlegt. Dies bietet den gro-ßen Vorteil, dass bei einem länger für einen jeweiligen Reinigungs-/Pflegeprozess zur Verfügung stehenden Zeitfenster die Prozessdauer ebenfalls verlängert werden kann, wodurch beispielsweise die Konzentration des Reinigungs-/Pflegemittels bzw. eine Menge eines solchen in einer mit Wasser angereicherten Reinigungs-/Pflegelösung reduziert werden kann, was nicht nur materialschonender, sondern auch ressourcenschonender ist, so dass die gleiche Menge an Reinigungs-/Pflegemittel 3 länger hält. Dauer ein Reinigungs-/Pflegeprozess üblicherweise zwei Stunden, so kann dieser bei einer üblichen Nicht-Nutzungszeit von acht Stunden auf beispielsweise sechs Stunden verlängert werden, wodurch eine erhöhte Einwirkzeit erreicht werden kann. Ist in dieser deutlich verlängerten Einwirkzeit lediglich die gleiche Menge an beispielsweise Kalk zu lösen, kann die Konzentration der Reinigungs-/Pflegelösung reduziert werden. Ein derartiger Reinigungs-/Pflegeprozess ist nicht nur materialschonender, sondern führt auch dazu, dass mit derselben Menge an Reinigungs-/Pflegemittel mehr Reinigungs-/Pflegeprozesse durchgeführt werden können. Steht beispielsweise lediglich ein deutlich reduziertes Zeitfenster zur Verfügung, so kann auch eine erhöhte Konzentration an Reinigungs-/Pflegemittel 3 in der Reinigungs-/Pflegelösung eine verkürzte Prozessdauer bewirken.

Ebenfalls vorstellbar ist, dass eine Eingabeeinrichtung 6 bzw. ein Timer 7 vorgesehen sind, wobei über die Eingabeeinrichtung 6 der Reinigungs-/Pflegeprozess manuell aktivierbar ist. Dies bietet den großen Vorteil, dass beispielsweise vor einer längeren Stillstandzeit des Kaffeeautomaten 1 ein solcher Reinigungs-/Pflegeprozess noch über die Eingabeeinrichtung 6 manuell aktiviert werden kann, obwohl die hierfür üblicherweise erforderliche Anzahl an ausgegebenen Getränken noch nicht erreicht ist. Über den Timer 7 kann darüber hinaus ein vordefinierter Startzeitpunkt festgelegt werden, so dass beispielsweise noch kurz vor einer anstehenden Urlaubszeit der Kaffeeautomat gereinigt bzw. gepflegt wird, obwohl auch hier die hierfür erforderliche Anzahl an ausgegebenen Tassen bzw. Getränken noch nicht erreicht ist.

Entsprechend der Figur 2 wird ein erfindungsgemäßes Verfahren zum Betrieb des Kaffeeautomaten 1 dargestellt, wobei der erste Verfahrensschritt "Gerät wird ausgeschaltet" nicht unbedingt erforderlich ist, sondern das Reinigen/Pflegen des Kaffeeautomaten 1 auch bei eingeschaltetem Kaffeeautomaten 1 turnusmäßig erfolgen kann. Zunächst wird von der Erfassungs-/Auswerteeinrichtung 5 das Nutzungsverhalten des Kaffeeautomaten 1 erfasst und ausgewertet und ermittelt, ob ein Reinigungs-/Pflegeprozess erforderlich ist. Ist dieser nicht erforderlich, wird das Verfahren beendet. Ist dieser erforderlich, so kann beispielsweise über ein Home Connect Modul eine Nutzungszeit t₁₁ bis t₁₂ bzw. eine Nicht-Nutzungszeit t₂₁ bis t₂₂ ermittelt werden. Je nach zur Verfügung stehender Nicht-Nutzungszeit kann dabei die Konzentration des Reinigungs-/Pflegemittels 3 bzw. einer daraus mit zusätzlichem Wasser gebildeten Reinigungs-/Pflegelösung und/oder eine Dauer des Reinigungs-/Pflegeprozesses festgelegt werden. So ist es beispielsweise möglich, dass bei einer über Nacht zur Verfügung stehenden Nicht-Nutzungszeit von acht Stunden ein üblicherweise lediglich zweistündiger Reinigungs-/Pflegeprozess auf sechs Stunden verlängert und dadurch die Konzentration an Reinigungs-/Pflegemittel 3 in einer Reinigungs-/Pflegelösung reduziert wird. Durch die Reduzierung des Anteils an Reinigungs-/Pflegemittel 3 hält dieses länger und zugleich kann die gleiche Menge an beispielsweise Kalk gelöst werden, jedoch zusätzlich materialschonender aufgrund der geringeren Konzentration.

In dem Verfahrensschritt "Standardprozessparameter werden abgerufen" wird somit ein Lösungsvolumen, eine Dosiermenge und eine Prozessdauer bzw. Prozesszeit abgerufen und anhand der zuvor ermittelten Parameter, wie beispielsweise Nicht-Nutzungszeit oder Nutzungszeit, im Verfahrensschritt "Prozessparameter und Startzeit werden individuell optimiert" angepasst. Hierbei kann beispielsweise die Konzentration des Reinigungs-/Pflegemittels 3 bzw. der Reinigungs-/Pflegelösung sowie die Prozessdauer adaptiert werden. Anschließend erfolgt der Prozessstart und der Reinigungs-/Pflegeprozess, beispielsweise ein Spülprozess, wobei vor dem Ende ein Getränkezähler wieder zurückgesetzt wird.

Mit dem erfindungsgemäßen Kaffeeautomaten 1 und dem erfindungsgemäßen Verfahren ist es möglich, einen sich selbst reinigenden Kaffeeautomaten 1 bereitzustellen, wobei der Reinigungs-/Pflegeprozess zugleich an eine Gerätenutzung angepasst und dadurch eine optimale Ausnutzung eines Reinigungs-/Pflegemittels 3 erreicht werden. Zudem ist der Reinigungs-/Pflegeprozess materialschonend, insbesondere sofern die Konzentration des eingesetzten Reinigungs-/Pflegemittels 3 reduziert wird. Durch die kontinuierliche Reinigung des Kaffeeautomaten 1 kann dessen Lebensdauer und dessen Funktionalität erhöht werden.

### Bezugszeichenliste

- 1: Kaffeeautomat
- 2: Vorratsbehälter
- 3: Reinigungs-/Pflegemittel
- 4: Steuerungseinrichtung
- 5: Erfassungs-/Auswerteeinrichtung
- 6: Eingabeeinrichtung
- 7: Timer

## Patentansprüche

1. Kaffeeautomat (1) mit
- einem Vorratsbehälter (2) für ein Reinigungs-/Pflegemittel (3),
- einer Steuerungseinrichtung (4) zum Steuern eines Reinigungs-/Pflegeprozesses,
- einer Erfassungs-/Auswerteeinrichtung (5) zur Erfassung und Auswertung eines Betriebs des Kaffeeautomaten (1), wobei die Erfassungs-/Auswerteeinrichtung (5) derart ausgebildet ist, dass sie ein Nutzungsverhalten des Kaffeeautomaten (1) erfasst und auswertet und den Reinigungs-/Pflegeprozess daran anpasst und automatisch aktiviert, **dadurch gekennzeichnet, dass** die Erfassungs-/Auswerteeinrichtung (5) derart ausgebildet ist, dass sie Nicht-Nutzungszeiten erfasst und hieraus eine übliche Nicht-Nutzungszeit ermittelt und in dieser über die Steuerungseinrichtung (4) den Reinigungs-/Pflegeprozess aktiviert bzw. steuert, und/oder dass die Erfassungs-/Auswerteeinrichtung (5) derart ausgebildet ist, dass sie Nutzungszeiten erfasst und hieraus eine übliche Nutzungszeit ermittelt und außerhalb dieser über die Steuerungseinrichtung (4) den Reinigungs-/Pflegeprozess aktiviert bzw. steuert.

2. Kaffeeautomat nach Anspruch 1, **dadurch gekennzeichnet, dass** die Erfassungs-/Auswerteeinrichtung (4) derart ausgebildet ist, dass sie in Abhängigkeit der ermittelten üblichen Nicht-Nutzungszeit oder Nutzungszeit eine Konzentration des Reinigungs-/Pflegemittels (3) in einer Reinigungs-/Pflegelösung und/oder eine Dauer des Reinigungs-/Pflegeprozesses festlegt.

3. Kaffeeautomat nach einem der vorhergehenden Ansprüche, **dadurch gekennzeichnet, dass** eine Eingabeeinrichtung (6) vorgesehen ist, über welche der Reinigungs-/Pflegeprozess manuell aktivierbar ist.

4. Kaffeeautomat nach einem der vorhergehenden Ansprüche, **dadurch gekennzeichnet, dass** ein Timer (7) vorgesehen ist, über welchen eine vorbestimmte Startzeit für den Reinigungs-/Pflegeprozess einstellbar ist.

5. Verfahren zum Betrieb eines Kaffeeautomaten (1) nach einem der vorhergehenden Ansprüche, bei dem die Erfassungs-/Auswerteeinrichtung (5) das Nutzungsverhalten des Kaffeeautomaten (1) erfasst und auswertet und den Reinigungs-/Pflegeprozess daran anpasst und über die Steuerungseinrichtung (4) automatisch aktiviert.

6. Verfahren nach Anspruch 5, **dadurch gekennzeichnet, dass** die Erfassungs-/Auswerteeinrichtung (5) Nicht-Nutzungszeiten erfasst und hieraus eine übliche Nicht-Nutzungszeit ermittelt und in dieser über die Steuerungseinrichtung (4) den Reinigungs-/Pflegeprozess aktiviert bzw. steuert, und/oder dass die Erfassungs-/Auswerteeinrichtung (5) Nutzungszeiten erfasst und hieraus eine übliche Nutzungszeit ermittelt und außerhalb dieser über die Steuerungseinrichtung (4) den Reinigungs-/Pflegeprozess aktiviert bzw. steuert.

7. Verfahren nach Anspruch 6, **dadurch gekennzeichnet, dass** die Erfassungs-/Auswerteeinrichtung (5) in Abhängigkeit der ermittelten üblichen Nicht-Nutzungszeit oder der Nutzungszeit eine Konzentration des Reinigungs-/Pflegemittels (3) in einer Reinigungs-/Pflegelösung und/oder eine Dauer des Reinigungs-/Pflegeprozesses festlegt.

## Claims

1. Coffee machine (1) with
- a storage container (2) for a cleaning/maintenance product (3),
- a control facility (4) for controlling a cleaning/maintenance process,
- a registration/evaluation facility (5) for registering and evaluating an operation of the coffee machine (1), wherein the registration/evaluation facility (5) is embodied such that it registers and evaluates a usage pattern of the coffee machine (1) and adapts the cleaning/maintenance process thereto, and activates said cleaning/maintenance process automatically, **characterised in that** the registration/evaluation facility (5) is embodied such that it registers non-usage times and therefrom determines a usual non-usage time, and activates or controls the cleaning/maintenance process during said usual non-usage time via the control facility (4), and/or that the registration/evaluation facility (5) is embodied such that it registers usage times and therefrom determines a usual usage time, and activates or controls the cleaning/maintenance process outside of said usual usage time via the control facility (4).

2. Coffee machine according to claim 1, **characterised in that** the registration/evaluation facility (4) is embodied such that it defines a concentration of the cleaning/maintenance product (3) in a cleaning/maintenance solution and/or a duration of the cleaning/maintenance process as a function of the determined usual non-usage time or usage time.

3. Coffee machine according to one of the preceding claims, **characterised in that** provision is made for an input facility (6) via which the cleaning/maintenance process can be activated manually.

4. Coffee machine according to one of the preceding claims, **characterised in that** provision is made for a timer (7) via which a predetermined start time for the cleaning/maintenance process can be set.

5. Method for operating a coffee machine (1) according to one of the preceding claims, in which the registration/evaluation facility (5) registers and evaluates the usage pattern of the coffee machine (1) and adapts the cleaning/maintenance process thereto, and activates said cleaning/maintenance process automatically via the control facility (4).

6. Method according to claim 5, **characterised in that** the registration/evaluation facility (5) registers non-usage times and therefrom determines a usual non-usage time, and activates or controls the cleaning/maintenance process during said usual non-usage time via the control facility (4), and/or that the registration/evaluation facility (5) registers usage times and therefrom determines a usual usage time, and activates or controls the cleaning/maintenance process outside of said usual usage time via the control facility (4).

7. Method according to claim 6, **characterised in that** the registration/evaluation facility (5) defines a concentration of the cleaning/maintenance product (3) in a cleaning/maintenance solution and/or a duration of the cleaning/maintenance process as a function of the determined usual non-usage time or usage time.

## Revendications

1. Distributeur automatique de café (1) comprenant :
- un récipient de stockage (2) pour un produit de nettoyage/d'entretien (3),
- un moyen de commande (4) permettant de commander une opération de nettoyage/d'entretien, et
- un moyen de détection/d'évaluation (5) pour détecter et évaluer un fonctionnement du distributeur automatique de café (1),
dans lequel le moyen de détection/d'évaluation (5) est configuré de sorte qu'il détecte et évalue un comportement d'utilisation du distributeur automatique de café (1) et adapte à celui-ci et active automatiquement l'opération de nettoyage/d'entretien,
**caractérisé en ce que** le moyen de détection/d'évaluation (5) est configuré de sorte qu'il détecte des plages de temps de non-utilisation et qu'il détermine à partir de là une plage de temps usuelle de non-utilisation et active ou commande au cours de celle-ci l'opération de nettoyage/d'entretien par le biais du moyen de commande (4), et/ou **en ce que** le moyen de détection/d'évaluation est configuré de sorte qu'il détecte des plages de temps d'utilisation et qu'il détermine à partir de là une plage de temps usuelle d'utilisation et active ou commande en dehors de cette plage de temps l'opération de nettoyage/d'entretien par le biais du moyen de commande (4).

2. Distributeur automatique de café selon la revendication 1, **caractérisé en ce que** le moyen de détection/d'évaluation (4) est configuré de sorte qu'il détermine une concentration du produit de nettoyage/d'entretien (3) dans une solution de nettoyage/d'entretien et/ou une durée de l'opération de nettoyage/d'entretien en fonction de la plage de temps de non-utilisation ou de la plage de temps d'utilisation usuelle déterminée.

3. Distributeur automatique de café selon l'une des revendications précédentes, **caractérisé en ce qu'**un moyen d'entrée (6) est prévu, par le biais duquel l'opération de nettoyage/d'entretien peut être activée manuellement.

4. Distributeur automatique de café selon l'une des revendications précédentes, **caractérisé en ce qu'**une horloge (7) est prévue, par laquelle une heure de départ prédéterminée pour l'opération de nettoyage/d'entretien est réglable.

5. Procédé de fonctionnement d'un distributeur automatique de café (1) selon l'une des revendications précédentes, dans lequel le moyen de détection/d'évaluation (5) détecte et évalue le comportement d'utilisation du distributeur automatique de café (1) et adapte à celui-ci et active automatiquement l'opération de nettoyage/d'entretien par le biais du moyen de commande (4).

6. Procédé selon la revendication 5, **caractérisé en ce que** le moyen de détection/d'évaluation (5) détecte des plages de temps de non-utilisation et qu'il détermine à partir de là une plage de temps usuelle de non-utilisation et active ou commande au cours de celle-ci l'opération de nettoyage/d'entretien par le biais du moyen de commande (4), et/ou **en ce que** le moyen de détection/d'évaluation détecte des plages de temps d'utilisation et qu'il détermine à partir de là une plage de temps usuelle d'utilisation et active ou commande en dehors de cette plage de temps l'opération de nettoyage/d'entretien par le biais du moyen de commande (4).

7. Procédé selon la revendication 6, **caractérisé en ce que** le moyen de détection/d'évaluation (5) détermine une concentration du produit de nettoyage/d'entretien (3) dans une solution de nettoyage/d'entretien et/ou une durée de l'opération de nettoyage/d'entretien en fonction de la plage de temps de non-utilisation ou de la plage de temps d'utilisation usuelle déterminée.
